# EUROPEAN PATENT APPLICATION

(11) **EP 2 990 255 A1**
(43) Date of publication of application: **02.03.2016**
(21) Application number: 15172724.5
(22) Date of filing: 18.06.2015
(51) Int. Cl.: B60L 11/18

(54) **VEHICLE CHARGING DEVICE AND METHOD**

(30) Priority: 01.09.2014 KR 20140115270
(71) Applicant: LSIS Co., Ltd., Anyang-si, Gyeonggi-do 431-848 (KR)
(72) Inventor: Jung, Han Uk, Anyang-si, Gyeonggi-do 431-848 (KR)
(74) Representative: Lang, Johannes

(57) **Abstract**

A vehicle charging device is provided. The vehicle charging device includes a grid plug connected to an external power source for providing power for vehicle charging, a grid cable connected to the grid plug, a charging circuit interrupt device (CCID) connected to the grid cable and including a relay circuit for a vehicle charging control, a coupler connected to the vehicle and a coupler cable connecting the coupler and the CCID, wherein the grid plug includes first and second terminals electrically connected to the external power source and first and second temperature sensors disposed at positions separated by a predetermined distance from the first and second terminals, and the first and second temperature sensors are commonly connected to a ground line earthed.

## Description

### BACKGROUND

The present disclosure relates to a vehicle charging device, and particularly to a vehicle charging device capable of replacing a plug or coupler connected to a charging circuit interrupt device (CCID) according to a use environment.

In a vehicle including an electric vehicle (EV), a plug in hybrid vehicle (PHV), or the like, a storage battery is mounted for storing power supplied to an electric motor (motor) that is a prime mover of a corresponding vehicle. In addition, for charging the storage battery, a grid plug connected to a power supply source and a CCID including a plug (coupler) connected to a power supply opening of a vehicle.

However, since the grid plug connected to the power supply source and the coupler connected to the power supply opening of the vehicle is fixedly connect to a CCID main body, vehicle charging is not smoothly performed or a danger such as fire may occur in a case where such charging devices are used in countries that have different maximum allowable currents.

In other words, typical charging devices should be used only in an environment where a pre-designed maximum allowable current is identical, and when a user uses a corresponding charging device in an area in which a charging environment is different, a limitation in vehicle charging may occur.

In addition, there is a case where a temperature sensor for detecting heat generated in a plug during vehicle charging is provided, and the temperature sensor in failure or malfunction may affect the vehicle charging. For example, even when a temperature around the plug is in a normal range during the vehicle charging, it may be determined that overheating occurs due to the failure in the temperature sensor and the charging is stopped.

### SUMMARY

Embodiments provide a charging device capable of controlling efficient vehicle charging with temperature values measured by a plurality of temperature sensors when the plurality of temperature sensors are provided to ensure stable vehicle charging.

Embodiments also provide a charging device configured to enable a grid plug connected to a power supply source and a coupler connected to a vehicle to be detachable from a charging circuit interrupt device (CCID) main body.

Embodiments also provide a charging device capable of determining a maximum allowable current according to a coupler or grid coupler connected to the CCID main body. Embodiments also provide a charging device enabling stable vehicle charging by autonomously varying a maximum allowable current according to a replaced plug or grid coupler.

Embodiments also provide a charging device capable of preventing in advance a case where an internal circuit of the CCID is damaged or malfunctioned by an overvoltage or a spike voltage during vehicle charging by configuring a temperature sensor mounted for checking a charging state not to directly contact to a plug terminal.

In one embodiment, a vehicle charging device includes: a grid plug connected to an external power source for providing power for vehicle charging; a grid cable connected to the grid plug; a charging circuit interrupt device (CCID) connected to the grid cable and including a relay circuit for a vehicle charging control; a coupler connected to the vehicle; and a coupler cable connecting the coupler and the CCID, wherein the grid plug includes first and second terminals electrically connected to the external power source and first and second temperature sensors disposed at positions separated by a predetermined distance from the first and second terminals, and the first and second temperature sensors are commonly connected to a ground line earthed.

In another embodiment, a vehicle charging method, as a method of controlling charging by using a device including a plug connected to a power supply source providing power necessary for vehicle charging and a CCID connected to the plug through a charging cable, includes: reading, by the CCID, temperature values measured by two temperature sensors provided in the plug and determining a greater one of the read measurement temperature values as a current temperature when the vehicle charging is performed by using the plug and charging cable, wherein the two temperature sensors disposed at positions separated by a predetermined distance from terminals electrically connected to the power supply source are provided in the plug; determining whether a difference between the temperature values measured by the temperature sensors is greater than a first set temperature; and stopping the vehicle charging when the difference between the temperature values measured by the temperature sensors is greater than the first set temperature.

The details of one or more embodiments are set forth in the accompanying drawings and the description below. Other features will be apparent from the description and drawings, and from the claims.

### BRIEF DESCRIPTION OF THE DRAWINGS

Fig. 1 is a view illustrating an environment in which a charging device is used according to an embodiment.
Fig. 2 is a view illustrating a vehicle charging device according to an embodiment.
Figs. 3 and 4 are views illustrating structures of a grid plug detachable from a CCID main body according to an embodiment.
Fig. 5 is a view illustrating the inside of the plug in which temperature sensors are mounted according to an embodiment.
Figs. 6 to 9 are views illustrating sensor connection lines of temperature sensors and sensor sheaths protecting the sensor connection lines.
Fig. 10 is a flowchart illustrating a method for controlling vehicle charging by using a plurality of temperature sensors according to an embodiment.
Fig. 11 is a view illustrating an exemplary pin configuration of a connector according to an embodiment.
Fig. 12 is a view illustrating a configuration of pins of a connector and connection terminal holes to which the pins are connected.
Figs. 13 to 16 are exemplary views illustrating different types of charging cables connectable to a male connector.

### DETAILED DESCRIPTION OF THE EMBODIMENTS

Reference will now be made in detail to the embodiments of the present disclosure, examples of which are illustrated in the accompanying drawings.

A charging device and method for vehicle according to an embodiment will be described in detail with reference to the accompanying drawings. The invention may, however, be embodied in many different forms and should not be construed as being limited to the embodiments set forth herein; rather, that alternate embodiments included in other retrogressive inventions or falling within the spirit and scope of the present disclosure can easily be derived through adding, altering, and changing, and will fully convey the concept of the invention to those skilled in the art.

In addition, the terms "first" and "second" can be selectively or exchangeably used for the members.

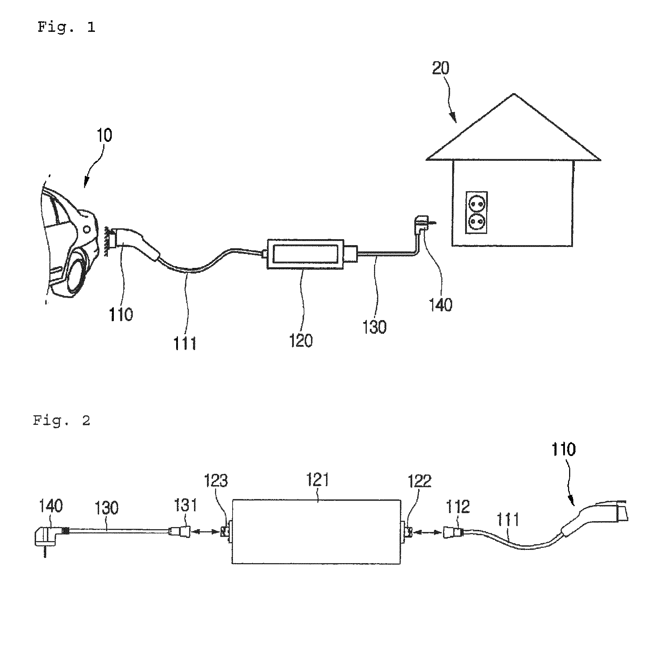

Fig. 1 is a view illustrating an environment in which a charging device is used according to an embodiment.

Fig. 1 illustrates a typical environment in which a vehicle charging device is used. The vehicle charging device connects a charging cable between a vehicle 10 and a power socket in a house 20 to enable a storage battery mounted in a vehicle to be charged by use power source (e.g., a system power source) outside the vehicle. Hereinafter, the power source outside the vehicle may be referred to 'power supply source' or 'external power source', and vehicle charging by the power supply source or external power source may be referred to 'external charging'.

A vehicle charging device of an embodiment may include a charging circuit interrupt device (CCID) 120 including a relay circuit and pilot circuit, a grid plug 140 connected to an external power source, a grid cable 130 connecting the grid plug 140 and the CCID 120, a coupler 110 connected to a vehicle 10, and a coupler cable 111 connecting the coupler 110 and CCID 120.

In particular, the coupler cable 111 and the grid cable 130 are mounted detachably from the CCID 120, and to this end, a connector for cable connection is provided to the CCID 120. A description about this will be provided below in detail with the accompanying drawings.

Furthermore, the vehicle 10 includes a charging opening to which the coupler 110 is connected, and a charging device for charging power supplied through the coupler cable 111 and the coupler 110. In addition, a communication device is provided for communication with the CCID 120 in the vehicle 10. For example, the communication device may deliver a state of the vehicle 10 to the CCID 120 or comply with a charging related control command of the CCID 120.

In addition, the CCID 120 may perform a control for vehicle charging by using the external power source, and include a CCID relay capable of blocking or allowing a supply from the external power source and a pilot circuit for checking a state of the vehicle or external power source.

Here, the CCID relay may be turned on/off by the pilot circuit and the pilot circuit may output a pilot signal to a charging electronic control unit (ECU) of the vehicle 10. In addition, the pilot signal is a signal for detecting a state of the vehicle 10 on the basis of a potential of the pilot signal manipulated by the charging ECU together with notifying an allowable current value (regulated current) of a charging cable (grid cable, connector cable) to the charging ECU of the vehicle 10.

In addition, the pilot circuit may control a CCID relay on the basis of a potential change of the pilot signal.

For the CCID, the CCID relay and pilot circuit may be designed in a state where an allowable current value, namely, a maximum allowable current is pre-determined. In other words, when a CCID used in a specific country is desired to use in another country, charging the vehicle 10 may become incomplete or overcharged to be in danger due to a different allowable current for each country.

In order to prevent this case, in an embodiment, a structure capable of separating a cable from a CCID main body is proposed herein and description will be provided about a vehicle charging device capable of varying a maximum allowable current in a CCID according to a cable connected even in different environments.

Fig. 2 is a view illustrating a vehicle charging device according to an embodiment.

Referring to Fig. 2, the vehicle charging device of an embodiment includes a CCI main body 121 including a CCID relay and pilot circuit, a coupler 110 and a grid cable 130 coupled to be detachable from the CCID main body 121.

The grid cable 130 includes a grid end portion 131 connectable to a grid connecter 123 of the CCID main body 121, and a grid plug 140 connectable to the external power source (power supply source) is provided to the other side end portion of the cable 130.

In addition, the coupler 110 connected to a charging opening of the vehicle includes a coupler end portion 112 connected to the coupler connecter 122 of the CCID main body 121, and a coupler cable 111 connects between the coupler 110 and the coupler end portion 112. Here, the charging cable may include the grid cable 130 and the coupler cable 111.

The coupler connector 122 for connecting a coupler side is formed at one side of the CCID main body 121, and the grid connecter 123 connected to a grid plug side for being connected to the power supply source is provided to the other side of the CCID main body 121. In addition, each of the coupler cable 111 and grid cable 130 may be selectively electrically connected to the CCID main body 121 by a user.

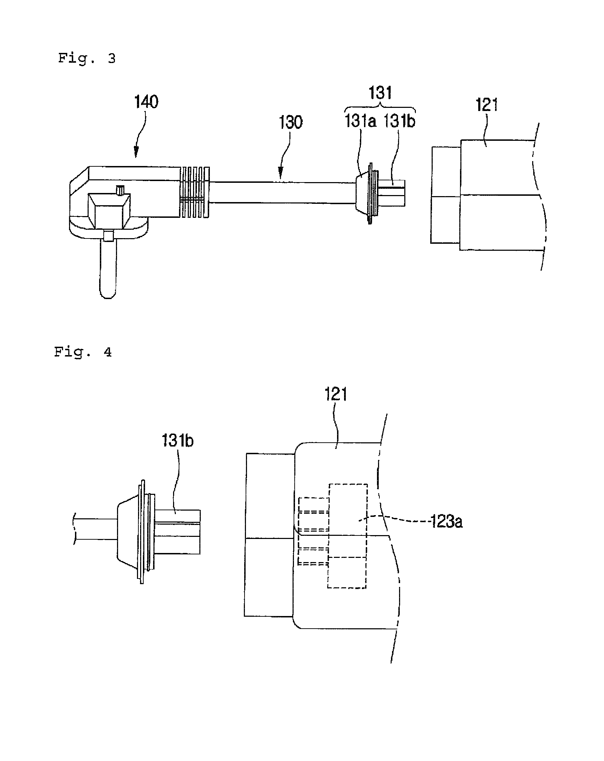

Figs. 3 and 4 are views illustrating a structure of a grid plug detachable from the CCID main body according to an embodiment.

Although structures that the grid cable connected to the grid plug is detachable from the CCID main body 121 are illustrated in Figs. 3 and 4, the coupler and coupler cable may also be connected to be detachably from the CCID main body 121 with a similar structure.

For the structure that the grid plug 140 and the grid cable 130 are detachable from the CCIS main body 121, the grid end portion 131 is provided to one side end portion of the grid cable 130 and the grid plug 140 is provided to the other end portion.

In addition, the grid end portion 131 includes a CCID connection unit 131b connected to a grid connector 123a provided inside the CCID main body 121 and a cable connection unit 131a connecting the CCID connection unit 131b and the grid cable 130.

A case where the grid connecter 123a is formed inside the CCID main body 121 is illustrated in Fig. 4. However, it is possible to provide a grid connector in an exposed shape at one side of the CCID main body 121 as illustrated in Fig. 2.

In addition, the grid connector 123a may be formed with a male connector having a structure that 8 pins protrude, and the CCID connection unit 131b connected to the grid connector 123a may be formed with a female connector into which 8 pins may be inserted. It is also possible that the female and male connectors are inversely formed. Although a case where a connector is formed with 8 pins is exemplified, it is obvious to those skilled in the art to vary the number of pins according to embodiments.

In a case where the grid connector 123a formed with the male connector is provided inside the CCID main body 121, a user may insert the CCID connection unit 131b of the grid plug side into the CCID main body 121 and connect the grid plug side to the CCID by applying pressure. In particular, the CCID main body 121 may re-set the maximum allowable current value according to the connected grid cable or coupler cable.

In detail, it is possible to determine a type of charging cable connected to the CCID main body through positions of the pins connected to the coupler connector or grid connector. To this end, for some of pins forming the grid connector (or coupler connector) 123a of the CCID main body 121, a pin for charging and a pin for determining a type of connected cable may be pre-determined.

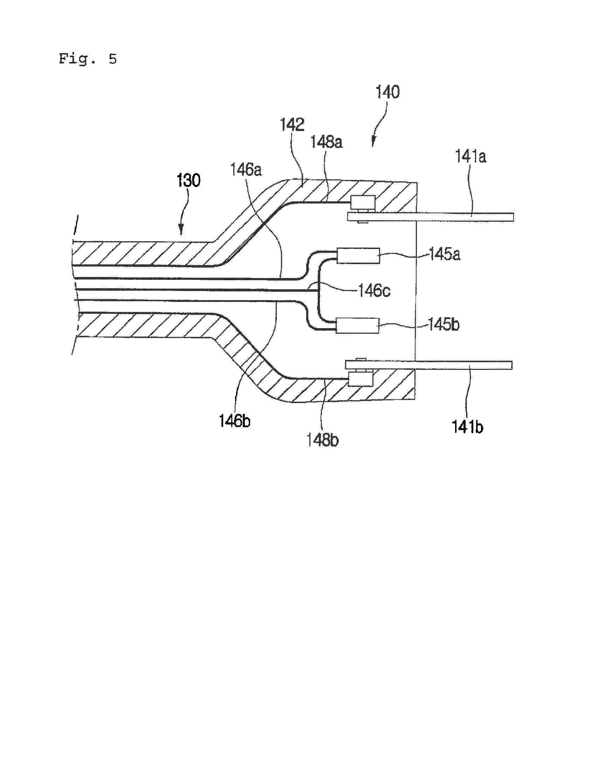

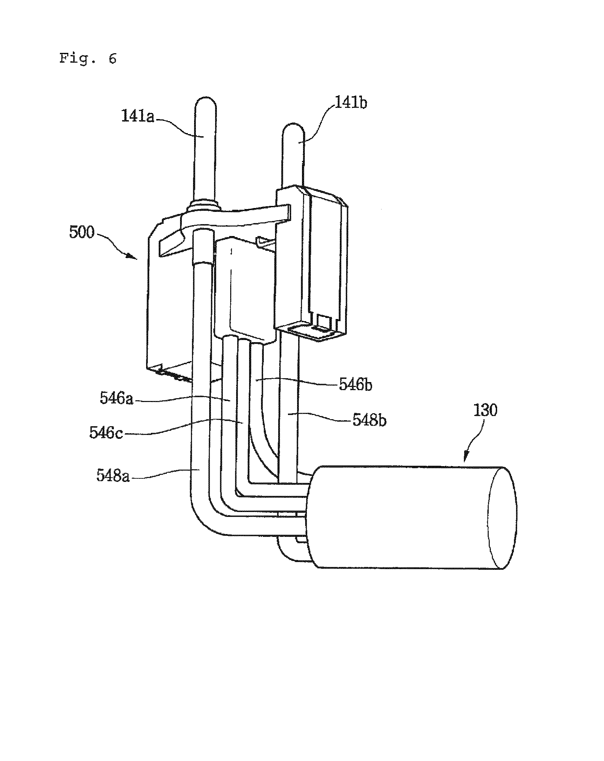

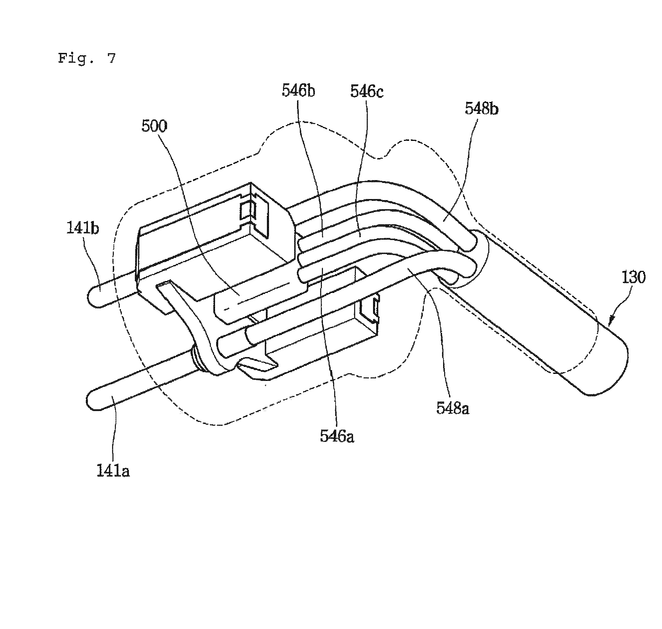

Fig. 5 is a view illustrating the inside of the plug in which temperature sensors are mounted according to an embodiment, and Figs. 6 to 9 are views illustrating sensor connection lines of the temperature sensors and sensor sheaths for protecting the sensor connection lines according to embodiments.

The temperature sensor of an embodiment may be provided in the grid plug 140 or the coupler 110, and a description will be provided about an example case that two temperature sensors are mounted in the grid plug 140.

Referring to Figs. 5 to 9, one pair of temperature sensors 145a and 145b perform a role for sensing surrounding temperature and converting the sensed temperature to an electrical signal to deliver the electrical signal.

In particular, the temperature sensors 145a and 145b of the embodiment are provided inside the plug in a state of not contacting the first and second terminals 141a and 141b electrically connected to the vehicle or power supply source. In other words, the temperature sensors are disposed separate at a predetermined interval between the first and second terminals 141a and 141b in the plug. It is because that when the temperature sensor is mounted to directly contact the terminal through which power is delivered, an overvoltage or spike voltage by the temperature sensor may flow inside the circuit via the terminal.

In addition, first and second terminal connection cables 148a and 148b respectively connected to the first and second terminals 141a and 141b are accepted in the grid cable 130 connected to the grid plug 140. However, these terminal connection cables pass the inside of the grid cable 130 by respective connection sheaths 548a and 548b for insulation.

In addition, first to third sensor connection lines 146a, 146b, and 146c connected to the temperature sensors also pass through the grid cable 130, and the sensor connection lines pass through the grid cable 130, where the sensor connection lines are enclosed with the sensor sheaths 546a, 546b, and 546c for insulation.

According to an embodiment, one pair of temperature sensors 145a and 145b may be disposed separate at a predetermined interval from the terminals 141a and 141b through which powers are respectively delivered, and be divided into the first temperature sensor 145a disposed relatively adjacent to the first terminal 141a and the second temperature sensor 145b disposed relatively adjacent to the second terminal 141b.

At this point, the first and second temperature sensors 145a and 145b are disposed to maintain the separate distance from the respective terminals 141a and 141b, and a ground line for electrical connection of the first and second temperature sensors 145a and 145b is formed with a single ground line 146c. Accordingly, even when two temperature sensors are provided in the plug, lines for electrical connection of the temperature sensors may be implemented with only three according to an embodiment.

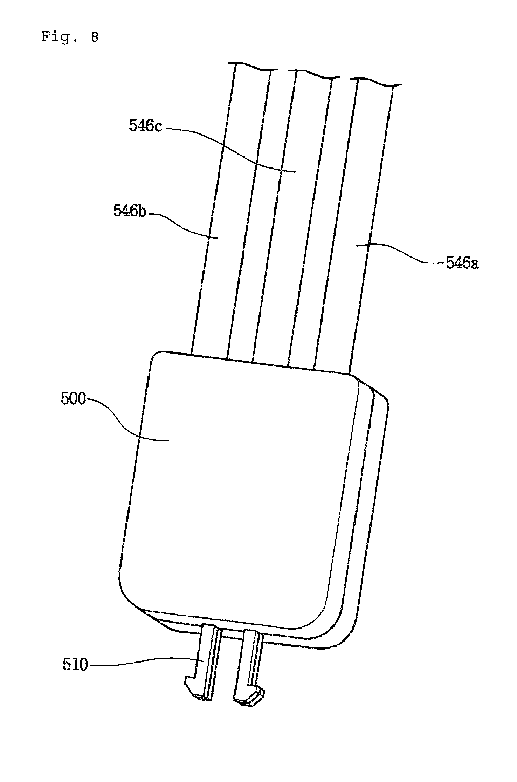

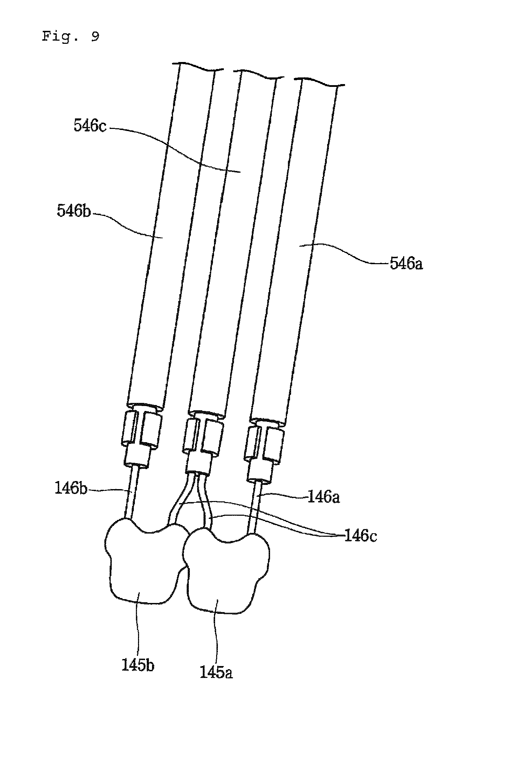

A description about the temperature sensors and sensor connection lines connected to the temperature sensors will be provided in detail with reference to Figs. 8 and 9.

As described above, the ground line 146c connected to the one pair of temperature sensors 145a and 145b is used in common, and the first and second sensor connection line 146a and 146b delivering electrical signals representing temperature values measured by the respective temperature sensor 145a and 145b pass the inside of the grid cable 130 in a state of being protected by each of the first and second sensor sheaths 546a and 546b.

In addition, the ground line 146c of the temperature sensors 145a and 145b pass the inside of the grid cable 130 in a state of being protected by the second sensor sheath 546c. Accordingly, the sheaths passing the inside of the grid cable 130 become three, and this is because that the ground line to be connected to the temperature sensors is used in common.

Furthermore, the temperature sensors 145a and 145b may be accepted in a state of being protected by a sensor housing 500 inside the plug and a detachable hook unit 510 may be provided to the sensor housing 500 so that positions of the sensor housing 500 and the temperature sensors 145a and 145b accepted in the sensor housing 500 are fixed in the plug. In addition, the first and second temperature sensors are accepted at positions separated by a predetermined distance in the sensor housing 500.

The hook unit 510 is formed in one side surface of the sensor housing 500 and a position thereof may be fixed by coupling the hook unit 510 to a groove or hole in the inner wall of the plug when the sensor housing 500 is inserted into the plug.

In addition, the temperature sensors 145a and 145b are required to be disposed separate at a predetermined interval in the sensor housing 500 for blocking the temperature sensors from being short-circuited.

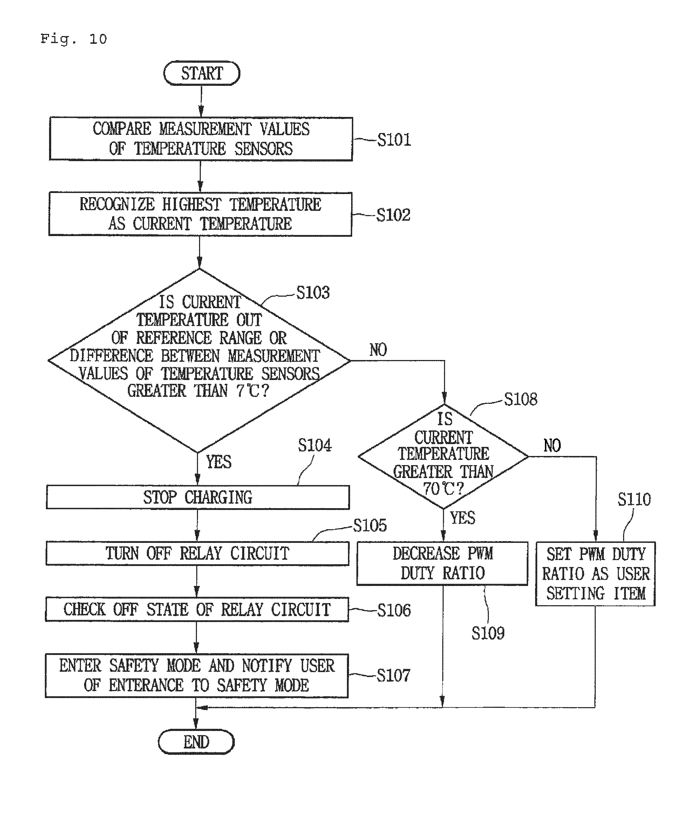

Fig. 10 is a flowchart illustrating a method for controlling the vehicle charging by using a plurality of temperature sensors according to an embodiment.

During performing the vehicle charging, a temperature is measured by a temperature sensor disposed on a line delivering power. For example, temperatures are measured by a plurality of temperature sensors disposed in the plug.

In addition, the measured values by the temperature sensors are compared (operation S101).

Then, among the temperature values of the compared result, a value measured as a highest temperature is determined as a current temperature for the vehicle charging in the CCID or charging ECU in a vehicle (operation S102). This is because in a view of determining overheating in advance by using a temperature sensor during the vehicle charging, it is better to determine as a current temperature a temperature value measured as the highest temperature in consideration of an error occurring for each temperature sensor.

In addition, the CCID determines whether the temperature value determined as the current temperature is out of a preset reference range or a difference between temperature values measured by corresponding temperature sensors is deviated from a preset reference value (operation S103). In addition, when the temperature value determined as the current temperature is out of the preset reference range or a difference between temperature values measured by corresponding temperature sensors is deviated from the preset reference value, the CCID stops the vehicle charging (operation S104). Such a vehicle charging stop command may be performed by the charging ECU of a vehicle besides the CCID.

For example, it is determined to be out of the preset reference range in a case where the temperature value determined as the current temperature exceeds a preset highest temperature of about 80 °C, and in a case where the temperature value determined as the current temperature is lower than a preset lowest temperature of about -40 °C. When such a value out of the reference range is set as the current temperature, a corresponding temperature sensor is determined to be in malfunction or failure.

In addition, even when a difference between measurement values of the temperature sensors provided in the plug is greater than a reference value (e.g., 7 °C) (i.e., may be referred to a first set temperature or a first set value), since there may be a case where errors occur in all the temperature sensors or faults occur in a circuit (e.g., CCID) reading the temperature value through the temperature sensor, the vehicle charging for all the cases is required to be stopped.

Like this, when a stop command for the vehicle charging is issued in a case where the measured temperature value used as the current temperature is deviated from an upper limit or a lower limit and in a case where a difference between measurement values of the temperature sensors is deviated from a preset reference value, a relay circuit in the CCID becomes turned off (operation S105). In addition, checking whether a corresponding relay circuit maintains the off state for stopping the charging may be further undergone (operation S106). This is because a case where the relay circuit is not normally turned off may occur even in a case where a control to turn off the relay circuit is performed when relay fusing occurs, although an L-phase line and an N-phase line of the relay circuit are required to be physically separated. A process for checking whether the relay circuit is in off state, a vehicle state (e.g., whether to charge or a charge current) may be checked by using a pilot signal.

In addition, when the vehicle charging is stopped like this, the CCID enters a safety mode and may display the entering to the safety mode by using an LED or the like in order for the user to check the charging state (operation S107).

Furthermore, as the determined result in operation S103, when the measurement temperature value set as the current temperature is not out of the reference range (upper limit and lower limit) and a difference between temperature values measured by the temperature sensors is smaller than a preset reference value, it is determined whether the temperature value set as the current temperature is greater than the reference value (e.g., 70 °C) (may be referred to the second set temperature) for determining whether a duty ratio of power width modulation (PWM) is changed (operation S108). For reference, a value of charging current used for the vehicle charging may be increased by an increase and decreased by a decrease in a PWM duty ratio.

Here, the second set temperature is a reference value for determining whether to change the PWM duty ratio for vehicle charging control and becomes a criterion for determining whether there is a need of decreasing the PWM duty ratio for preventing overheating in advance, although it is not overheated to a degree of stopping the vehicle charging. For example, when the measured temperature value set as the current temperature is in a preset reference range and the difference between the measurement values of the temperature sensors is smaller than the first set temperature but greater than the second set temperature (e.g., 70 °C), a vehicle charging speed is decreased by decreasing the PWM duty ratio for the vehicle charging control (operation S109). In addition, in a case where a charging current is decreased by decreasing the PWM duty ratio because the difference between the measurement temperature values of the temperature sensors is smaller than the first set temperature and greater than the second temperature, when a measurement temperature value additionally measured by the temperature sensor is smaller than the second set temperature, the charging current may be increased by increasing the PWM duty ratio and accordingly the vehicle charging speed may be increased.

On the contrary, when the measured temperature value set to the current temperature is not greater than the second set temperature, the vehicle charging is not allowed to be performed with a PWM duty ratio corresponding to a charging speed set by the user (operation S110). In other words, normal vehicle charging is allowed to be performed and the vehicle charging is performed according to the PWM duty ratio set by the user or the charging current value.

Through such a vehicle charging method, a more accurate vehicle charging control may be performed by a plurality of temperature sensors, more accurate diagnosis for overheating during charging becomes possible, and accordingly the vehicle charging control may be efficiently performed.

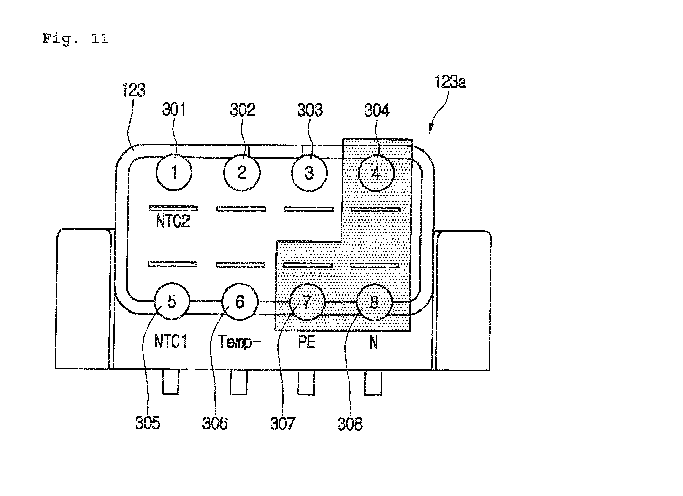

Fig. 11 is a view illustrating an exemplary pin configuration of a connector according to an embodiment.

In Fig. 11, a male connector provided to the CCID main body 121 is illustrated, and a corresponding male connector may be a grid connecter or a coupler connector. When the connector of Fig. 5 is the grid connector 123a, the grid end portion 131 is coupled to the grid connector 123a and connected through a grid plug and cable connected to a power supply source side.

Even when different types of charging cables may be connected to the single CCID body 121, the numbers of connector pins of the charging cable side and connector pins of a CCID side may be identical for the vehicle charging and for determining a type of charging cable. Here, the charging cable may be a grid cable 130 connected to the power supply source side or a coupler cable connected to a vehicle.

The user may perform the vehicle charging only by replacing the charging cable in various environments (e.g., countries in which different maximum allowable currents are applied) by using the CCID main body 121 of the embodiment. However, the charging cable may also be the one in a case where connector pins are configured according to the present embodiment.

A female connector configured in the charging cable, namely, a grid plug side cable or a coupler side cable connected to the vehicle and a male connector in the CCID main body have the identical number of pins. More accurately, contact terminal holes into which male connector pins may be inserted are formed in the female connector. However, all the pins of the male connector are not necessary to be used, and it is sufficient that pins for power delivery for charging are connected to pins for determining a type of the connected charging cable.

As illustrate in Fig. 11, the connector of the CCID main body of an embodiment may be configured with a male connector having eight pins. Three pins among the eight pins are pins connected to the cable for the vehicle charging and the contact terminal holes in the charging cable are also required to be formed at positions corresponding to the charging pins of the male connector.

The eight pins may be formed in the male connector provided in the CCID main body 121 in two rows and four columns at a predetermined interval and three pins among them are allocated for power delivery for the vehicle charging. For example, a fourth pin 304 at a first row and fourth column, a seventh pin 307 at a second row and third column, and an eighth pin 308 at the second row and fourth column may be allocated for the charging pins. Among the charging pins, the fourth pin 304 is for an L-phase connection, the eighth pin 308 is for an N-phase connection, and the seventh pin 307 may be used for ground connection. However, this pin configuration is just one embodiment.

When three pins among the plurality of pins of the male connector are allocated for charging pins, the corresponding contact terminal holes among the contact terminal holes formed in the female connector (i.e., a connector between the coupler side cable and the grid side cable) connected to the male connector are required to have cable connection for charging.

When the male connector have eight pins and three pins among them are used for power delivery (i.e., charging) for the vehicle charging, various types of charging cables may be determined by using remaining pins (e.g., 5 pins). In other words, the types of charging cables connected to the CCID are determined by using the remaining pins and according vehicle charging is performed according to a preset maximum allowable current. At this point, a pin allocated for identifying the type of the connected female connector (e.g., charging cable) may be referred to a pin for charging cable identification.

According to an embodiment, a connection pin of the temperature sensor provided in the grid plug may be used for identifying the type of charging cable. According to the present embodiment, two temperature sensors are configured to monitor a vehicle charging state or sense whether a surrounding of the plug terminal becomes at a high temperature by an overcharge or spike type current.

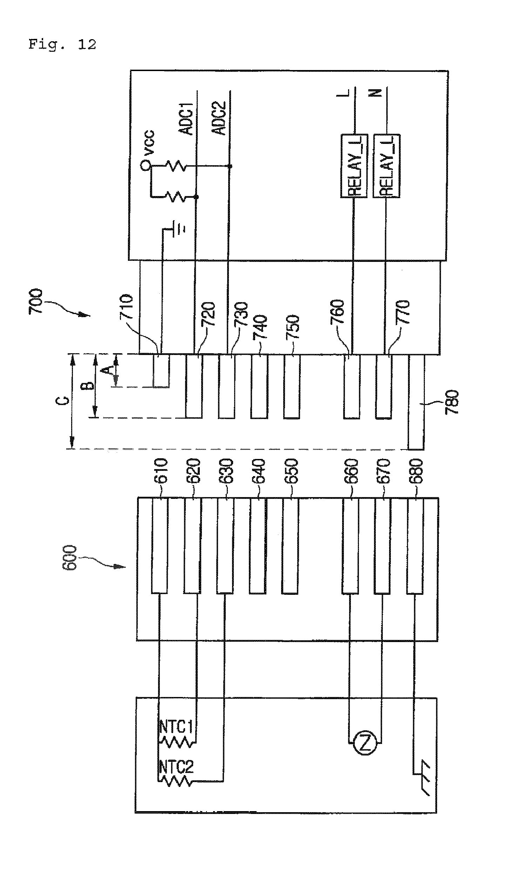

Fig. 12 is a view illustrating a configuration of pins of a connector and connection terminal holes to which the pins are connected.

Referring to Fig. 12, in the illustrated drawing, the left side is a female connector 600 and the right side is a male connector 700. In addition, as described above, the male connector 700 may be a coupler side connector or a grid side connector provided in the CCID main body, and the female connector 600 may be a connector provided at an end portion of coupler cable or provided at an end portion of grid cable.

Fig. 12 also illustrates an exemplary case where eight pins are used for electrical connection between the female connector 600 and the male connector 700.

Among them, three pins 760, 770, and 780 of the male connector 700 are charging pins that are power supply lines for the vehicle charging. In addition, charging contact terminal holes 660, 670, and 680 are provided at positions corresponding to the charging pins in the female connector 600. Even in a case where different types of female connectors are coupled to the male connector 700, positions and the number of the charging contact terminal holes corresponding to the charging pins 760, 770, and 780 of the male connector are to be provided in each of the female connectors.

Furthermore, remaining pins of the male connector 700 perform a role of determining a type of the connected female connector 600, and at this point, the remaining five pins of the male connector 700 may be referred to charging cable checking pins.

For the female connector 600 illustrated in Fig. 12, a first temperature sensor NTC1 and a second temperate sensor NTC2 are connected to the first to third contact terminal holes 610, 620, and 630, and sixth to eight contact terminal holes 660, 670, and 680 are coupled to the charging pins. When the female connector 600 is connected to the male connector 700, first to third pins 710, 720, and 730 among pins of the male connector 700 are electrically connected to the first and second temperature sensors NTC1 and NTC2.

The temperature values measured by the temperature sensors may be read and it may be checked that pins connected to the temperature sensors are the first to third pins by connecting the male connector 700 to the temperature sensors through the contact terminal holes of the female connector. Accordingly, the CCID may check the charging cable connected to the temperature sensor through the first to third pins among the first to fifth pins. In other words, a type of the charging cable may be determined together with the connection of the temperature sensors. For example, in a case where the CCID determines that the temperature sensors are connected through the first to third pins, the maximum allowable current for the vehicle charging may be set to 10A, and in a case where a larger current than the set current value flows, a control for stopping the vehicle charging may be performed.

Furthermore, a specific pin among the pins of the male connector 700 may be formed to have a different length, and for example, it is possible to form to be relatively smaller the size A of a pin connected to the ground line among lines connected to the temperature sensors or to form to be relatively larger the size C of a pin corresponding to the ground line 780 among the charging pins remaining by excluding the L-phase line and N-phase line.

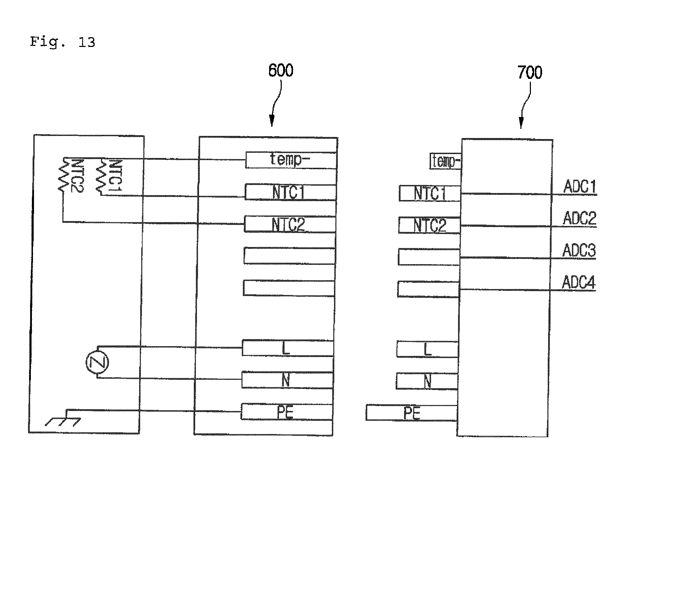

Figs. 13 to 16 are exemplary views illustrating different types of charging cables connectable to a male connector.

First, similar to the case illustrated in Fig. 12, Fig. 13 illustrates a case where lines connected to the temperature sensors in the plug are connected to the first to third pins 710 to 730 among the charging cable checking pins 710 to 750.

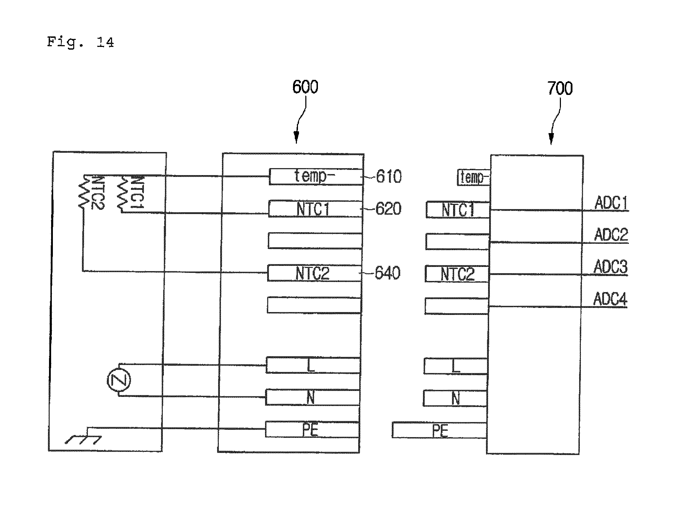

Furthermore, Fig. 14 illustrates a case where the first, second, and fourth contact terminal holes 610, 620, and 640 among the contact terminal holes of the female connector 600 connected to the male connector 700 form lines connected to two temperature sensors. In this case, when the female connector 600 is connected to the male connector 700, it is checked in the male connecter side that the temperature sensors are connected to the first, second, and fourth pins among the plurality of charging cable checking pins, and in this case, the second charging cable is determined to be connected. For example, the maximum allowable current may be set to 12A by the CCID and a maximum current value is differently applied at the time of charging control by the CCID. Since there is a case where the maximum allowable current for the vehicle charging is legally differently regulated for each area or each country, a vehicle charging control by the CCID may be performed suitably for the rule or regulation only by exchanging and connecting a charging cable in a corresponding area or country.

In addition, in the drawing, pins of the male connector 700 are to show a connection state when the corresponding female connector 600 is connected, and are not to represent that the pins of the male connector are preset for connection to the temperature sensors.

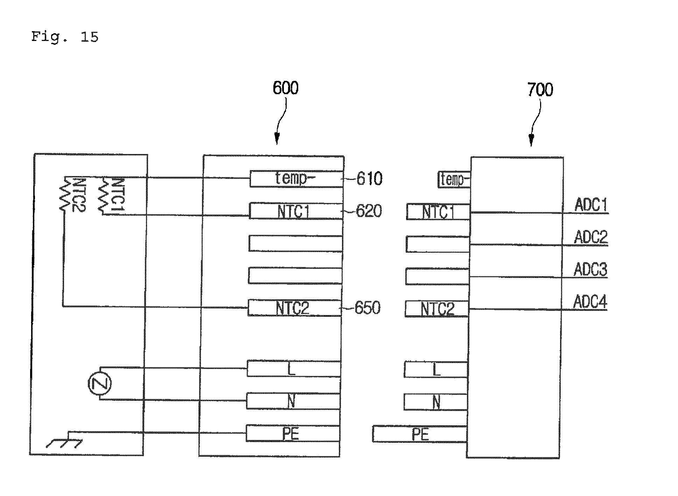

Furthermore, Fig. 15 illustrates a case where the first contact terminal hole 610 of the female connector 600 is allocated for connecting the ground line of the temperature sensor like the previous embodiments, the first temperature sensor NTC1 is connected to the second contact terminal hole 620, and the second temperature sensor NTC2 is connected to the fifth contact terminal hole 650.

When the female connector having such a contact terminal hole configuration is connected to the male connector 700, it may be determined that the temperature sensors are electrically connected to the first, second, and fifth pins of the male connector 700 and the CCID is in a state where the third charging cable is connected.

For example, when the third charging cable is connected, the CCID may set the maximum allowable current to 13A.

In addition, when the first pin of the male connector and the first contact terminal hole of the female connector are set to be connected to the ground lines of the temperature sensors, it is possible to form a bypass line in the contact terminal hole connected to any one of the temperature sensors in order to recognize the fourth charging cable.

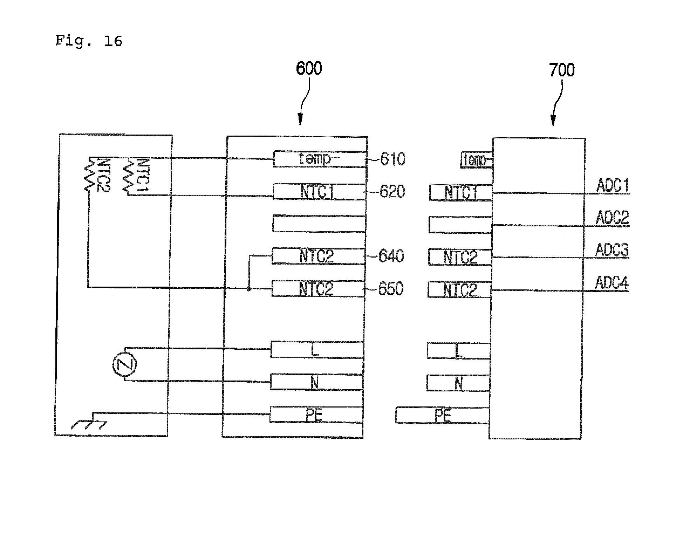

For example, as illustrated in Fig. 16, it is possible that the first temperature sensor NTC1 is connected to the second contact terminal hole 620, and the second temperature source NTC2 is connected to both the fourth and fifth contact terminal holes 640 and 650. At this point, at the side of the male connector 700 connected to the female connector 600, a state where the first, second, fourth, and fifth pins are connected to the temperature sensors is checked, and the fourth charging cable is determined as being connected. In addition, when the fourth charging cable is connected, the CCID may be preset to determine the maximum allowable current as 16A.

Although Fig. 16 illustrates that the fourth and fifth contact terminal holes are connected to one temperature sensor, it may also be possible to configure other contact terminal holes to be connected to an identical temperature sensor according to embodiments.

Through these methods, through one CCID and a connector provided to the CCID, a plurality of charging cables are connectable, and since each connected charging cable is identifiable, the vehicle charging may be performed according to the preset maximum allowable current.

In addition, the CCID may determine a type of connected charging cable and then notify a user of information on whether the current maximum allowable current is changed through an indicator.

According to a proposed vehicle charging device and method, temperature values measured by temperature sensors can be used more accurately and failure or not of the temperature sensors can be rapidly known. In addition, a limitation that overheating is not sensed by errors of the temperature sensors can be prevented in advance.

In addition, various types of charging cables are connectable if necessary and identification of the charging cables and the maximum allowable current can be easily varied through a preset position of the charging pin and an identification pin of the charging cable.

In addition, since a user can connect a charging cable corresponding to a vehicle charge regulation allowed by other countries or areas by using one CCID, purchase of an additional charging device including the CCID is not necessary.

In addition, since a temperature sensor in a plug is provided to maintain a separate distance from a terminal thereof, a case where an overvoltage and spike voltage by the temperature sensor is flowed inside a vehicle or CCID circuit can be prevented in advance.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A vehicle charging device comprising:
a grid plug connected to an external power source for providing power for vehicle charging;
a grid cable connected to the grid plug;
a charging circuit interrupt device (CCID) connected to the grid cable and comprising a relay circuit for a vehicle charging control;
a coupler connected to the vehicle; and
a coupler cable connecting the coupler and the CCID,
wherein the grid plug comprises first and second terminals electrically connected to the external power source and first and second temperature sensors disposed at positions separated by a predetermined distance from the first and second terminals, and the first and second temperature sensors are commonly connected to a ground line earthed.

2. The vehicle charging device according to claim 1, wherein a first sensor connection line connected to the first temperature sensor, a second sensor connection line connected to the second temperature sensor, and the ground line connected to the first and second temperature sensors pass an inside of the grid cable.

3. The vehicle charging device according to claim 2, wherein each of the first and second sensor connection lines and the ground line is covered with a sheath and pass the inside of the grid cable.

4. The vehicle charging device according to claim 1, wherein the grid cable is detachably coupled to the CCID.

5. The vehicle charging device according to claim 4, wherein the CCID determines a type of the grid cable from a connected pin when connected to the grid cable.

6. The vehicle charging device according to claim 5, wherein the CCID comprises a male connector comprising a plurality of pins for being selectively connected to the grid cable, and a female connector in which a plurality of contact terminal holes to which the pins of the male connector are inserted is formed at an end portion of the grid cable.

7. The vehicle charging device according to claim 6, wherein three pins among the pins of the male connector are allocated as charging pins for delivering power supplied from the external power source to the vehicle, and at least one pin of the pins of the male connector is allocated as an identification pin for determining a type of the connected female connector.

8. The vehicle charging device according to claim 5, wherein the CCID identifies a type of the connected grid cable and then varies a maximum allowable current used during the vehicle charging according to the identified result.

9. The vehicle charging device according to claim 1, further comprising a sensor housing accepting the first and second temperature sensors therein,
wherein the sensor housing is mounted in the grid plug.

10. The vehicle charging device according to claim 9, wherein the first and second temperature sensors are accepted to be separated from each other by a predetermined interval in the sensor housing.

11. The vehicle charging device according to claim 9, wherein a hook part formed to protrude with a predetermined thickness is provided at one side of the sensor housing, and
the hook part is coupled to a groove or hole provided in an inner wall of the grid plug.

12. A vehicle charging method for controlling charging by using a device comprising a plug connected to a power supply source providing power necessary for vehicle charging and a CCID connected to the plug through a charging cable, the method comprising:
reading, by the CCID, temperature values measured by two temperature sensors provided in the plug and determining a greater one of the read measurement temperature values as a current temperature when the vehicle charging is performed by using the plug and charging cable, wherein the two temperature sensors disposed at positions separated by a predetermined distance from terminals electrically connected to the power supply source are provided in the plug;
determining whether a difference between the temperature values measured by the temperature sensors is greater than a first set temperature; and
stopping the vehicle charging when the difference between the temperature values measured by the temperature sensors is greater than the first set temperature.

13. The vehicle charging method according to claim 12, wherein the stopping of the vehicle charging comprises turning off a relay circuit in the CCID and checking an off of the relay circuit.

14. The vehicle charging method according to claim 13, further comprising operating an LED comprised in the CCID for notifying a user of a state of the relay circuit after the checking of an off of the relay circuit.

15. The vehicle charging method according to claim 12, further comprising determining whether the measurement temperature value set as the current temperature is greater than a preset second set temperature when the difference between temperature values measured by the temperature sensors is smaller than the first set temperature.

16. The vehicle charging method according to claim 15, wherein the determining of the measurement temperature values corresponds to a case where the difference between temperature values measured by the temperature sensors is smaller than the first set temperature and the measurement temperature value set as the current temperature is in a range between an upper limit and a lower limit.

17. The vehicle charging method according to claim 16, further comprising decreasing a vehicle charging current when the measurement temperature value set as the current temperature is greater than the second set temperature.

18. The vehicle charging method according to claim 17, further comprising increasing the vehicle charging current again when the measurement temperature value is smaller than the second set temperature after a pulse width modulation (PWM) duty ratio is decreased.

19. The vehicle charging method according to claim 16, further comprising maintaining the vehicle charging current when the measurement temperature value set as the current temperature is smaller than the second set temperature.
